# EUROPÄISCHE PATENTSCHRIFT

(11) **EP 1 459 155 B1**
(45) Veröffentlichungstag und Bekanntmachung des Hinweises auf die Patenterteilung: **13.08.2008**
(21) Anmeldenummer: 02796587.0
(22) Anmeldetag: 09.12.2002
(51) Int. Cl.: G06F 21/00, G06F 21/20

(54) **VERFAHREN UND SYSTEM ZUM ERMITTELN EINER EINEM OBJEKT ZUGEORDNETEN INFORMATION**
METHOD AND SYSTEM FOR DETERMINING INFORMATION ASSOCIATED WITH AN OBJECT
PROCEDE ET SYSTEME PERMETTANT D'OBTENIR DES INFORMATIONS ASSOCIEES A UN OBJET

(30) Priorität: 17.12.2001 DE 10161968
(43) Veröffentlichungstag der Anmeldung: 22.09.2004
(73) Patentinhaber: Henkel AG & Co. KGaA, 40589 Düsseldorf (DE)
(72) Erfinder: LAMERS, Jörg, 47249 Duisburg (DE); NIEMANN, Aike, 40789 Monheim (DE); KLEINE, Daniel, 40225 Düsseldorf (DE)
(86) Internationale Anmeldenummer: PCT/EP2002/013925
(87) Internationale Veröffentlichungsnummer: WO 2003/052585

(56) Entgegenhaltungen:
- WO-A-01/37082
- WO-A-01/73687
- WO-A-01/77823
- US-A- 5 819 234

## Beschreibung

Die Erfindung betrifft ein Verfahren und ein System zum Ermitteln einer einem Objekt zugeordneten Information.

Ein solches Verfahren und ein solches System ist aus [1] bekannt.

Das in WO-A-01/37082 beschriebene System weist einen Transponder auf, in dessen Speicher eine den Transponder eindeutig identifizierende Identifikationsangabe gespeichert ist, sowie eine Internet-Adresse, welche eine Internet-Seite, die dem Objekt, dem der Transponder zugeordnet ist, ebenfalls zugeordnet ist. Von einer Transponder-Lese-Einrichtung wird gemäß [1] die Internet-Adresse ausgelesen und es wird eine Kommunikationsverbindung mit der von der Internet-Adresse angegebenen Internet-Seite aufgebaut. Nach erfolgtem Aufbau der Kommunikationsverbindung werden die entsprechenden Informationen über das Objekt, welche von der Internet-Seite bereitgestellt werden, von einem Client-Computer, mit dem die Transponder-Lese-Einrichtung gekoppelt ist, gelesen und einem Benutzer dargestellt.

Weiterhin ist in WO-A-01/73687 System beschrieben, bei dem von einer Transponder-Lese-Einrichtung aus einem Speicher eines Transponders eine den Transponder identifizierende Identifikationsangabe ausgelegen wird. Die Identifikationsangabe wird gemeinsam mit einer ebenfalls aus dem Transponderspeicher ausgelesenen Internet-Adresse gemäß [2] über eine Funkverbindung gemäß dem Bluetooth™-Protokoll an einen Client-Computer übertragen. Von dem Client-Computer wird unter Verwendung der Internet-Adresse eine Kommunikationsverbindung zu der von der Internet-Adresse durch die Internet-Adresse adressierten Internet-Seite aufgebaut und entsprechende über die Internet-Seite bereitgestellte Information kann anschließend von dem Client-Computer abgefragt werden.

Ferner sind aus DE-A-196-12 406 ein Informationsträger und ein Verfahren zum Überlagern und zum Verarbeiten von Informationen bekannt, wobei bei dem Informationsträger eine erste Information in Textform auf einem beschreibbaren und/oder bedruckbaren Medium und zusätzlich eine zweite aufgebrachte Information vorhanden ist, wobei die erste Information mit Sinnesorganen eines Menschen wahrnehmbar ist. Die zweite Information ist jedoch mit den Sinnesorganen eines Menschen nicht wahrnehmbar, wohl aber mit einem technischen Sensor erfassbar. Die erste und die zweite Information sind einander überlagert. Die zweite Information stellt eine Zusatzinformation zur ersten Information dar und bewirkt nach Auslesen durch den Sensor einen Prozess zum Bereitstellen einer weiteren Information zu einem beliebigen Zeitpunkt.

In US-A-6 119 935 ist ein System zum Erfassen einer Einkaufsliste beschrieben, wobei Produktinformation, die in Form eine Barcodes auf dem Produkt aufgebracht ist, abgescannt wird und entsprechende Zusatzinformation, welche ebenfalls in Form eines Barcodes auf dem Produkt aufgebracht ist, abgescannt werden kann und von einem die gescannte Information verarbeitenden Rechner weiter bearbeitet werden kann.

Der Erfindung liegt das Problem zugrunde, ein Verfahren und ein System zum Ermitteln einer einem Objekt zugeordneten Information anzugeben, welches es ermöglicht, eine Information über ein Objekt auf einfache Weise bereitzustellen und dennoch einen gewisses Maß an Schutz hinsichtlich des Objekts zu erreichen.

Das Problem wird durch das Verfahren und das System zum Ermitteln einer einem Objekt zugeordneten Information mit den Merkmalen gemäß den unabhängigen Patentansprüchen gelöst.

Bei einem Verfahren zum Ermitteln einer einem Objekt zugeordneten Information wird aus einem Speicher eines dem Objekt zugeordneten Transponders eine dort gespeicherte Internet-Adresse oder Intranet-Adresse und eine den Transponder eindeutig identifizierende, ebenso in dem Speicher gespeicherte Identifikationsangabe ausgelesen.

Dies erfolgt vorzugsweise mittels einer Transponder-Lese-Einrichtung. Die Transponder-Lese-Einrichtung ist vorzugsweise in einem Client-Computer, der als mobile Rechnereinheit, beispielsweise als Personal Digital Assistant (PDA) und/oder als Mobilfunktelefon eingerichtet ist, alternativ kann das PDA in dem Mobilfunktelefon integriert sein. Ferner kann der Client-Computer ein stationärer Rechner, z.B. ein Personal Computer oder ein in einem Haushaltsgerät integrierter Rechner sein. Die Transponder-Lese-Einrichtung kann alternativ mit einem Rechner gekoppelt sein, ohne dass sie integraler Bestandteil des Rechners ist.

Vorzugsweise von dem Client-Computer wird die ihm zugeführte Internet-Adresse oder Intranet-Adresse, welche aus dem Speicher des Transponders ausgelesen ist, über eine in dem Client-Computer vorgesehene Kommunikationsschnittstelle, über die der Client-Computer mit dem Internet, allgemein einem Kommunikationsnetz, über eine Telefonleitung oder eine Funkverbindung gekoppelt ist, verwendet, um eine Internet-Seite, welche mittels der Internet-Adresse oder mittels der Intranet-Adresse identifiziert wird, aufzurufen.

Anders ausgedrückt wird eine Kommunikationsverbindung mit einem Server-Computer, welcher die von der Internet-Adresse oder Intranet-Adresse, vorzugsweise einer URL-Adresse, bereitstellt, aufgebaut und von dem Server-Computer wird die angeforderte Internet-Seite oder Intranet-Seite an den Client-Computer vorzugsweise gemäß dem HTML-Protokoll (Hypertext Markup Language-Protokoll) oder dem WML-Protokoll (Wireless Markup Language-Protokoll) übertragen.

Ferner wird von dem Server-Computer an den Client-Computer eine Zugriffskontroll-Anforderungsnachricht übertragen, mit der eine Identifizierung der Zugriffsrechte hinsichtlich der das Objekt betreffenden Information ermöglicht wird. Von dem Client-Computer wird die aus dem Speicher des Transponders ausgelesene Identifikationsangabe aufgrund der Zugriffskontroll-Anforderungsnachricht als Zugriffsinformation in einer Zugriffs-Informations-Nachricht an den Server-Computer übermittelt, welcher nach deren Empfang eine Zugriffskontrolle durchführt. Anders ausgedrückt überprüft der Server-Computer, ob die Identifikationsangabe tatsächlich einem Transponder und darüber einem Objekt zugeordnet ist, zu dem die Information bereitgestellt werden soll. Dies erfolgt vorzugsweise durch Vergleich mit einer in dem Server-Computer gespeicherten Datenbank, alternativ durch Vergleich mit in einer Datenbank gespeicherten Daten, auf welche Datenbank der Server-Computer Zugriff hat, in welcher Datenbank die Objekte und die den dem Objekt zugeordneten Transponder identifizierenden Identifikationsangaben gespeichert sind.

Ist die Zugriffskontrolle erfolgreich, so wird von dem Server-Computer die gewünschte Information in Form einer zusätzlichen Internet-Seite oder Intranet-Seite an den Client-Computer übertragen und dort dem Benutzer des Client-Computers dargestellt, so dass auf diese Weise dem Benutzer Information über das Objekt zugänglich gemacht worden ist.

Ist jedoch die Zugriffskontrolle nicht erfolgreich, das heißt ist der Transponder kein Transponder, der dem Server-Computer "als berechtigt" bekannt ist, so wird von dem Server-Computer ein Fehlersignal erzeugt.

Ein System zum Ermitteln einer einem Objekt zugeordneten Information weist vorzugsweise einen Transponder auf, welcher beispielsweise einem Objekt eindeutig zugeordnet ist, wobei in dem Speicher des Transponders eine Internet-Adresse oder eine Intranet-Adresse und eine den Transponder eindeutig identifizierende Identifikationsangabe gespeichert ist.

Das System weist ferner eine Transponder-Lese-Einrichtung auf, welche derart eingerichtet ist, dass die in dem Speicher des Transponders gespeicherte Information ausgelesen werden kann. Die Transponder-Lese-Einrichtung ist vorzugsweise in einem Client-Computer, welcher mobil oder stationär ausgestaltet sein kann, integriert, alternativ mit diesem gekoppelt. Der Client-Computer weist ferner eine Kommunikationsschnittstelle auf, die derart eingerichtet ist, dass über sie eine Kommunikation gemäß dem Transport Control Protocol (TCP) / Internet Protocol (IP) erfolgen kann. Ferner ist in dem Client-Computer ein Internet-Browser-Programm (auch als Web-Browser-Programm bezeichnet), beispielsweise das Programm Internet Explorer™ oder das Programm Netscape Navigator™ gespeichert.

Über die Kommunikationsschnittstelle und über ein Telekommunikationsnetz, beispielsweise ein Mobilfunknetz oder ein Festnetz, ist der Client-Computer mit einem Server-Computer koppelbar, wobei der Server-Computer die jeweilige durch die Internet-Adresse oder Intranet-Adresse identifizierte Internet-Seite oder Intranet-Seite bereitstellt.

Der Server-Computer ist derart ausgestaltet, dass bei Aufruf der Internet-Seite oder Intranet-Seite eine Zugriffskontrolle initiiert wird, mittels der kontrolliert wird, ob die die Internet-Seite oder Intranet-Seite aufrufende Instanz nachweisen kann, d.h. insbesondere, ob die Transponder-Identifikationsangabe anzeigt, dass es sich um einen Transponder handelt, der einem Objekt zugeordnet ist, für das der Zugriff zu den Internet-Seiten oder Intranet-Seiten tatsächlich gestattet werden soll. Die Zugriffskontrolle wird vorzugsweise unter Verwendung der Identifikationsangabe des Transponders durchgeführt, so dass auf diese Weise unmittelbar aufgrund der eindeutigen Zuordnung des Transponders zu einem Objekt die Originalität des Objektes kontrollierbar ist.

Anschaulich kann die Erfindung darin gesehen werden, dass in dem Speicher eines Transponders, welcher einem Objekt zugeordnet ist, ein Web-Link, das heißt eine Webadresse, anders ausgedrückt eine Internet-Adresse oder Intranet-Adresse abgelegt ist. Der Web-Link führt bei Aufruf der jeweiligen Internet-Seite oder Intranet-Seite, das heißt bei Übertragen der Internet-Adresse oder der Intranet-Adresse über das Internet nicht unbedingt direkt auf eine Web-Seite, auf der Information, welche dem Objekt zugeordnet sein soll, vorzugsweise einer dem Objekt zugeordneten Produktinformation, enthalten ist, sondern zunächst auf eine objektneutrale, vorzugsweise eine produktneutrale Startseite.

Bei Aufruf dieser Internet-Start-Seite oder Intranet-Start-Seite wird von dem Server-Computer zunächst eine Zugriffskontrolle durchgeführt, vorzugsweise unter Abfrage der in dem Transponder gespeicherten und von dem Client-Computer ausgelesenen Identifikationsangabe.

Erst nach Überprüfung der Identifikationsangabe und somit einer erfolgreichen Zugriffskontrolle wird die Internet-Seite oder Intranet-Seite mit den eigentlichen Objekt-Informationen aufgerufen und der abfragenden Instanz, beispielsweise dem Client-Computer, bereitgestellt.

Dies entspricht anschaulich einem Schlüssel-Schloss-Prinzip.

Die Erfindung hat gegenüber dem Stand der Technik eine Vielzahl von Vorteilen.

Insbesondere gegenüber dem System aus [1] ist erfindungsgemäß ein integrierter Produktschutz, allgemein ein integrierter Schutz der dem Objekt zugeordneten und über die Internet-Seite bereitgestellten Information erreicht.

Ist das Objekt beispielsweise ein zu verkaufendes oder verkauftes Produkt, an dem der Transponder angebracht ist, so wird durch die erfindungsgemäße Kombination der Identifikationsangabe des Transponders und der Internet-Adresse oder Intranet-Adresse erreicht, dass nur Original-Produkte aufgrund der Zugriffskontrolle Service-Information, allgemein tatsächlich die Original-Produkte betreffende Informationen und möglicherweise auch den Objekte zugeordnete bereitgestellte Service-Informationen abgefragt werden können. Ferner lassen sich Nicht-Original-Produkte, das heißt Plagiate, lokalisieren, insbesondere wenn Lokalisierungsinformation verfügbar ist.

Bevorzugte Weiterbildungen der Erfindung ergeben sich aus den abhängigen Ansprüchen.

Gemäß einer Ausgestaltung der Erfindung ist es vorgesehen, dass die Internet-Adresse in dem Transponder-Speicher in komprimierter Form gespeichert ist, beispielsweise kann nur ein Teil der Internet-Adresse oder Intranet-Adresse, vorzugsweise der Teil "Seite.de", wobei mit "Seite" die jeweilige Internet-Seitenangabe oder Intranet-Seitenangabe angegeben wird, an Stelle der üblicherweise vollständigen Internet-Adresse oder Intranet-Adresse "http://www.seite.de" gespeichert sein. In diesem Fall wird in dem Client-Computer die komprimierte Internet-Adresse oder Intranet-Adresse zu der vollständigen Internet-Adresse oder Intranet-Adresse dekomprimiert, das heißt anschaulich erweitert.

In diesem Zusammenhang wird erfindungsgemäß ein an sich üblicher Mechanismus, den ein heutiges Internet-Browser-Programm bereit stellt, genutzt, um eine zusätzlichen Einsparung des in dem Transponder-Speicher ohnehin nur in sehr begrenztem Umfang verfügbaren Speicherplatzes zu erreichen. Unter Verwendung des dekomprimierten, das heißt der vollständigen Internet-Adresse wird die Internet-Seite oder die Intranet-Seite von dem Client-Computer aufgerufen.

Ferner kann die Internet-Adresse oder die Intranet-Adresse in verschlüsselter Form in dem Transponder-Speicher gespeichert sein. Gemäß dieser Ausgestaltung der Erfindung wird die verschlüsselte Internet-Adresse oder die verschlüsselte Intranet-Adresse in dem Client-Computer entschlüsselt und erst nach erfolgter Entschlüsselung erfolgt der Aufruf der Internet-Seite oder der Intranet-Seite von dem Client-Computer.

Gemäß einer anderen Ausgestaltung der Erfindung ist es vorgesehen, die Zugriffskontrolle, insbesondere die Identifikationsangabe kryptographisch zu sichern.

Dies kann beispielsweise dadurch erfolgen, dass über die Identifikationsangabe eine digitale Signatur unter Verwendung eines privaten Schlüssels, vorzugsweise des Herstellers, des jeweiligen Objekts gebildet wird und die digitale Signatur ebenfalls in dem Speicher des Transponders gespeichert wird.

Der Transponder-Speicher kann in einen frei zugänglichen ersten Speicherbereich und in einen nicht frei zugänglichen zweiten Speicherbereich aufgeteilt sein.

In dem nicht frei zugänglichen Speicherbereich ist die Identifikationsangabe des Transponders gespeichert, so dass eine unbefugte Veränderung der Identifikationsangabe unmöglich ist. Die digitale Signatur kann jedoch gefahrlos in dem frei zugänglichen Speicherbereich gespeichert sein, da diese ohnehin eindeutig nur von dem Hersteller des Objekts mit dessen geheimen Schlüssel überhaupt gebildet worden sein kann.

In dem Transponder-Speicher, vorzugsweise in dem frei zugänglichen ersten Speicherbereich, kann zusätzliche Information, beispielsweise das Kaufdatum, das heißt ein Datum, zu dem das Objekt von einem Benutzer bei einem Händler gekauft worden ist, gespeichert sein. Alternativ oder zusätzlich kann eine Angabe des das Objekt verkaufenden Händlers gespeichert sein.

Ist das Kaufdatum als zusätzliche Information in dem Transponder-Speicher gespeichert, so ist es gemäß einer Ausgestaltung der Erfindung vorgesehen, dass bei Aufruf der Internet-Seite oder Intranet-Seite und bei erfolgreicher Zugriffskontrolle Garantie-Informationen oder Dienstleistungen im Rahmen der Bereitstellung einer Garantie für das Objekt zur Verfügung gestellt werden.

Ist zusätzlich die Händlerangabe, optional ebenfalls kryptographisch gesichert, in dem Transponder-Speicher gespeichert, so ist es bei nicht erfolgreicher Zugriffskontrolle ermöglicht, dass der Händler, bei dem das Plagiat erstanden worden ist, unmittelbar auf einfache Weise ermittelbar ist. Auf diese Weise werden die Vertriebswege der Original-Produkte und auch von Plagiaten leichter nachvollziehbar, wodurch der Produktschutz eines jeweiligen Produkts verbessert wird.

Ferner kann das Objekt mit einem Global Positioning System (GPS) versehen sein, wodurch eine örtliche Produktortung bei erfolgreicher oder auch fehlerhafter Zugriffskontrolle ermöglicht ist. Diese ist insbesondere im Rahmen der Produktortung bei Diebstahl oder auch bei Rückrufaktionen von Vorteil.

Es ist in diesem Zusammenhang anzumerken, dass obwohl im Rahmen der folgenden Ausführungsbeispielen nur ein passiver Transponder beschrieben wird, erfindungsgemäß auch ein aktiver Transponder verwendet werden kann.

Ausführungsbeispiele der Erfindung sind in den Figuren dargestellt und werden im Weiteren näher erläutert. Ähnliche Elemente sind in den Figuren mit identischen Bezugszeichen versehen.

Es zeigen
Figuren 1a und 1b ein Ablaufdiagramm, in dem die einzelnen Verfahrensschritte und der Nachrichtenaustausch zwischen den einzelnen Elementen gemäß einem Ausführungsbeispiel der Erfindung dargestellt sind;
Figur 2 ein Blockdiagramm, in dem ein passiver Transponder gemäß einem Ausführungsbeispiel der Erfindung dargestellt ist;
Figur 3 ein Blockdiagramm, in dem ein Client-Computer gemäß einem Ausführungsbeispiel der Erfindung dargestellt ist;
Figur 4 ein Blockdiagramm, in dem ein erstes Ausführungsbeispiel der Erfindung dargestellt ist und
Figur 5 ein Blockdiagramm, in dem ein zweites Ausführungsbeispiel de Erfindung dargestellt ist.

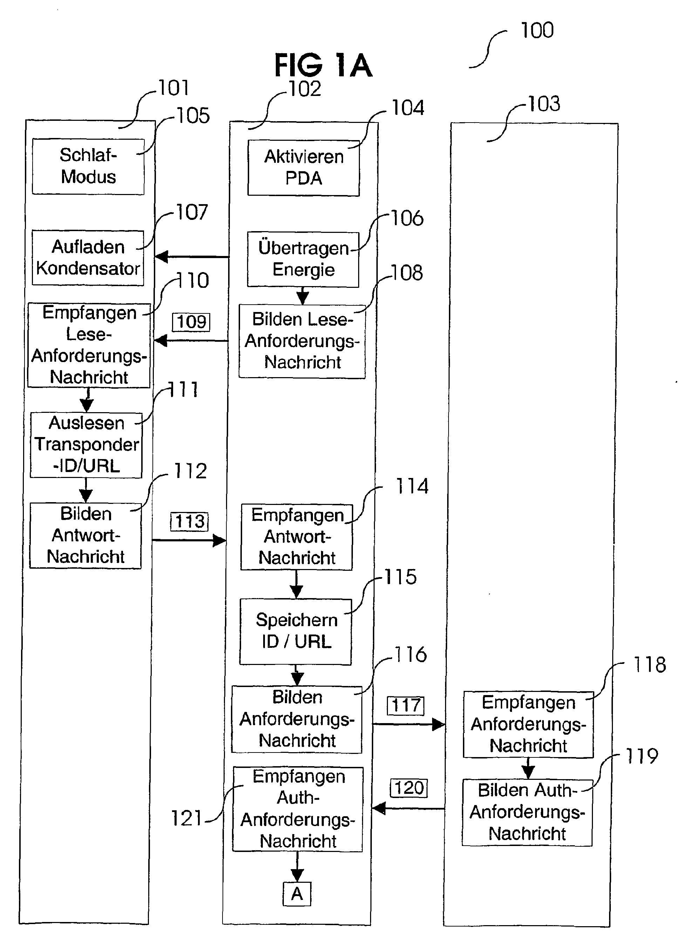

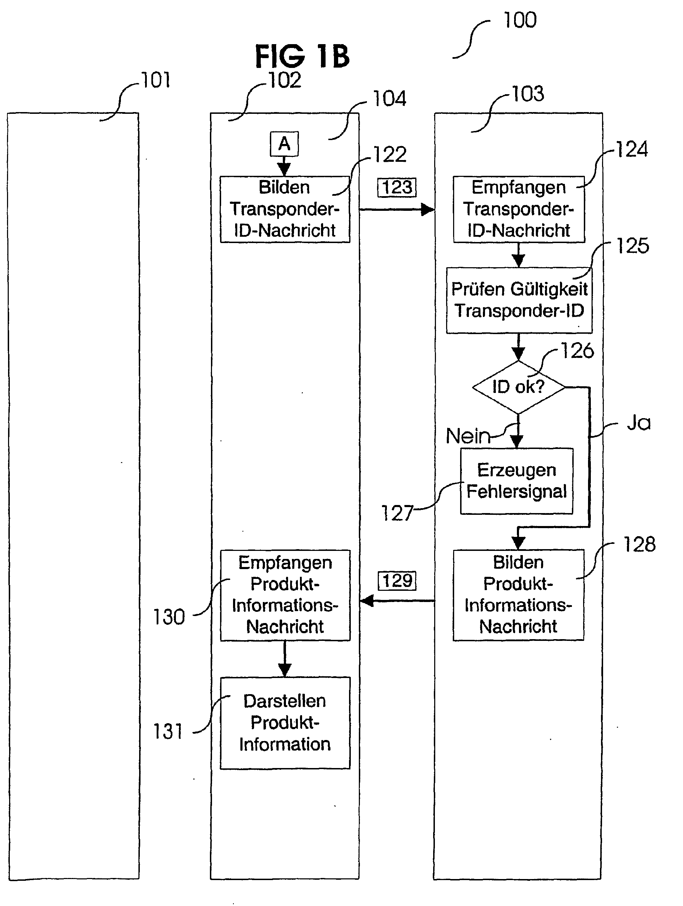

**Fig.1a** und **Fig.1b** zeigen in einem Blockdiagramm 100 die einzelnen Verfahrensschritte, die gemäß einem Ausführungsbeispiel der Erfindung ausgeführt werden sowie eine Übersicht über die Nachrichten, die zwischen den einzelnen Vorrichtungen des erfindungsgemäßen Systems ausgetauscht werden.

Das System weist einen Transponder 101, einen Client-Computer 102, gemäß Fig.1a und Fig.1b einen Personal Digital Assistant (PDA), sowie einen Server-Computer 103 auf. Der Client-Computer ist mit dem Transponder über eine Funk-Kommunikationsverbindung gekoppelt und mit dem Server-Computer über eine Mobilfunk-Kommunikationsverbindung und/oder eine Festnetz-Kommunikationsverbindung.

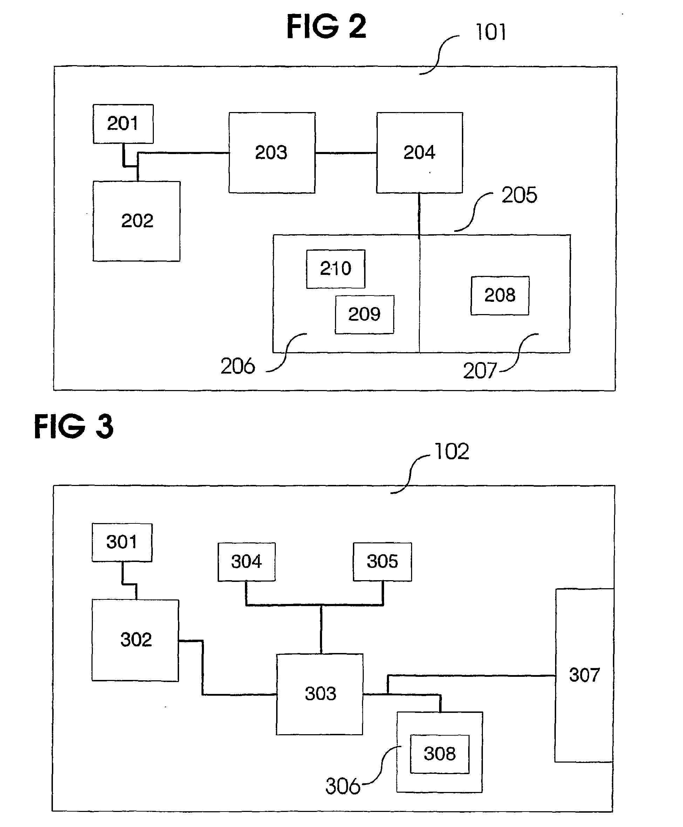

Fig.2 zeigt die Struktur des Transponders 101 in seinen einzelnen Komponenten. Der Transponder 101 weist eine Antenne 201 auf, über die der Transponder 101 Energie aufnehmen kann oder Nachrichten empfangen oder senden kann. Mit der Antenne 201 ist ein Kondensator 202 gekoppelt derart, dass über die Antenne 201 empfangene Energie in dem Kondensator 202 gespeichert wird.

Ist der Kondensator 202 aufgeladen, so dient er als Energiequelle zum Betreiben der weiteren in dem Transponder 101 enthaltenen Komponenten.

Ferner ist mit der Antenne und mit dem Kondensator 202 ein Transceiver 203 gekoppelt und mit diesem ein Logik-Schaltkreis 204, der wiederum mit einem elektronischen Speicher 205 gekoppelt ist, der einen ersten Speicherbereich 206 aufweist, auf den von einem Benutzer schreibend und lesend frei zugegriffen werden kann und einen zweiten Speicherbereich 207, auf welchen von einem Benutzer nur lesend zugegriffen werden kann.

Gemäß den Ausführungsbeispielen ist der Transponder 101 jeweils einem Produkt eindeutig zugeordnet, insbesondere an oder in diesem jeweiligen Produkt angebracht.

In dem zweiten Speicherbereich 207 ist eine den Transponder 101 selbst eindeutig identifizierende Identifikationsangabe 208 gespeichert, gemäß diesem Ausführungsbeispiel in Form eines 40-Bit-Codes. Ferner ist in dem ersten Speicherbereich 206 Zusatzinformation 209 gespeichert, gemäß diesen Ausführungsbeispielen ein Kaufdatum, zu dem das jeweilige Produkt an oder in der Transponder-Einheit angebracht ist, an einen Endverbraucher verkauft worden ist sowie eine Händler-Identifikationsangabe zur eindeutigen Identifikation des Händlers, der das Produkt verkauft. Weiterhin ist in dem ersten Speicherbereicht 206 eine Internet-Adresse oder Intranet-Adresse 210 gespeichert, mit der auf eine Startseite des Herstellers des Produkts, dem der Transponder 101 zugeordnet ist, verwiesen wird.

Die Händler-Identifikationsangabe kann verschlüsselt oder zur eindeutigen Authentifikation des Händlers mittels einer digitalen Signatur unter Verwendung des dem jeweiligen Händler zugeordneten geheimen Schlüssel gesichert sein.

**Fig.3** zeigt eine Skizze eines Personal Digital Assistant 102 als Client-Computer gemäß dem ersten Ausführungsbeispiel der Erfindung.

Der PDA 102 weist ebenfalls eine Antenne 301 auf, welche mit einem RF-Transceiver 302 gekoppelt ist. Der RF-Transceiver 302 ist mit einer zentralen Steuerungseinheit (Central Processing Unit, CPU) 303 gekoppelt, welche ihrerseits mit einer Tastatur 304 und mit einem Bildschirm 305 gekoppelt ist. Ferner weist das PDA 102 eine Kommunikationsschnittstelle 307 auf, welche zur Datenkommunikation über das Internet oder gemäß einem Internet-Protokoll (insbesondere gemäß dem Transport Control Protocol (TCP) oder dem Internet Protocol (IP)) ausgestaltet ist, wobei die Kommunikationsschnittstelle 307 zur Kommunikation über ein Mobilfunknetz und/oder ein Festnetz, beispielsweise ein übliches Telefonnetz, eingerichtet ist.

Ferner ist die CPU 303 mit einem Speicher 306 gekoppelt.

In dem Speicher 306 ist ein Web-Browser-Programm 308 gespeichert, welches gemäß der Wireless Markup Language (WML) codierte Daten austauschen kann.

Wird das PDA 102 in einem ersten Schritt (vgl. Fig.1a) zum Auslesen des Transponders aktiviert (Schritt 104), so wird Energie in einem weiteren Schritt (Schritt 106) von dem PDA 102 an den sich zu Beginn des Verfahrens in einem Schlaf-Modus 105, das heißt in einem inaktiven Modus, befindet, übertragen.

Die Energie wird von dem Transponder 101 über dessen Antenne 201 empfangen und der Kondensator 202 wird mit der empfangenen Energie aufgeladen (Schritt 107).

Anschließend wird von dem PDA 102 eine Lese-Anforderungs-Nachricht 109 erzeugt (Schritt 108) und an den Transponder über eine Funkverbindung gesendet, gemäß diesem Ausführungsbeispiel gemäß dem ISO Standard 15693.

Die Lese-Anforderungs-Nachricht 109 wird von dem Transponder 101 empfangen (Schritt 110) und nach entsprechender Decodierung der Lese-Anforderungs-Nachricht 109 wird von dem Transponder 101 die in dem ersten Speicherbereich 206 gespeicherte Internet-Adresse oder Intranet-Adresse sowie die Transponder-ID, das heißt die den Transponder 101 eindeutig identifizierende Identifikationsangabe 208, aus dem zweiten Speicherbereich 207 ausgelesen (Schritt 111) und es wird eine Antwort-Nachricht 113 erzeugt und an das PDA gesendet (Schritt 112).

Nach Empfangen der Antwort-Nachricht 113 durch das PDA 102 (Schritt 114) werden die aus der Antwort-Nachricht 113 ermittelten Daten, das heißt insbesondere die Internet-Adresse oder Intranet-Adresse 210 und die Transponder-ID 208, gegebenenfalls noch in dem ersten Speicherbereich enthaltene und mit der Antwort-Nachricht 113 ebenfalls mit übertragene Zusatzinformation 209 in den Speicher 306 des PDA 102 gespeichert (Schritt 115).

In einem weiteren Schritt (Schritt 116) wird eine Anforderungs-Nachricht 117 erzeugt, in welcher die Internet-Adresse 210 enthalten ist und mit welcher die Übertragung der durch die Internet-Adresse oder Intranet-Adresse 210 adressierte Internet-Seite oder Intranet-Seite beantragt wird.

In einer alternativen Ausgestaltung der Erfindung ist es vorgesehen, dass in dem ersten Speicherbereich 206 die Internet-Adresse oder Intranet-Adresse in komprimierter Form gespeichert ist, das heißt beispielsweise nur gemäß dem Format "Seite.de", wobei mit "Seite" lediglich die vor der "de"-Domäne angegebene Adresse enthalten ist.

Somit wird gemäß dieser alternativen Ausgestaltung der Erfindung nur der String "Seite.de" in der Antwort-Nachricht 113 an das PDA übertragen und dort unter Verwendung des in dem Speicher 306 des PDA 102 gespeicherten Internet-Browser-Programms 308 dekomprimiert, das heißt um die weiteren Angaben "http://www." ergänzt und dann als Gesamt-Internet-Adresse oder Gesamt-Intranet-Adresse "http://www.seite.de" in der Anforderungs-Nachricht 117 über das Internet/Intranet an den Server-Computer 103 übertragen.

Der Server-Computer 103 empfängt die Anforderungs-Nachricht 117 (Schritt 118), decodiert diese und erzeugt und sendet eine Authentifikations-Anforderungs-Nachricht 120 an das PDA 102 (Schritt 119).

Mit der Authentifikations-Anforderungs-Nachricht 120 fordert der Server-Computer 103 das PDA 102 auf, den Transponder 101 und darüber das dem Transponder eindeutig zugeordnete Produkt zu identifizieren und zu authentifizieren.

Nach Empfangen der Authentifikations-Anforderungs-Nachricht 120 (Schritt 121) wird von dem PDA 102 die Transponder-ID aus dem Speicher 306 ausgelesen und es wird eine Transponder-ID-Nachricht 123 erzeugt und an den Server-Computer 103 gesendet (Schritt 122).

Der Server-Computer 103 empfängt die Transponder-ID-Nachricht 123 (Schritt 124), decodiert diese und prüft die in der Transponder-ID-Nachricht 123 enthaltene Transponder-ID auf ihre Gültigkeit (Schritt 125).

Dies wird durchgeführt anhand einer Datenbank, die entweder in dem Server-Computer 103 selbst gespeichert ist oder auf die der Server-Computer 103 Zugriff hat, wobei in der Datenbank jeweils zu einem Produkt, zu denen ein Transponder zugeordnet ist und die jeweilige zugehörige eindeutige Transponder-ID gespeichert sind.

Dies bedeutet, dass in der Datenbank die Information enthalten ist, ob für die jeweilige Transponder-ID ein zulässiges Produkt existiert oder ob es sich bei dem dem Transponder zugehörigen Produkt beispielsweise um ein Plagiat handelt.

Ist die Transponder-ID nicht in Ordnung (Schritt 126), anders ausgedrückt, scheitert die Zugriffskontrolle, so wird von dem Server-Computer 103 ein Fehlersignal erzeugt (Schritt 127).

Ausgehend von dem Fehlersignal kann für den Fall, dass in der Transponder-ID-Nachricht 123 zusätzlich die Händlerangabe enthalten ist, diese ausgewertet werden und es kann der jeweilige Händler, der das zugehörige Produkt verkauft hat, kontaktiert werden, wodurch es sehr einfach möglich ist, die Vertriebswege von Plagiaten aufzudecken.

Ist die Zugriffskontrolle erfolgreich, anders ausgedrückt, ist die Überprüfung der Transponder-ID positiv verlaufen, so wird die Internet-Seite oder die Intranet-Seite, ausgehend von der Internet-Seite oder der Intranet-Seite, welche adressiert wurde, aufgerufen und es wird die darin enthaltene Produktinformation als Produkt-Informations-Nachricht 129 von dem Server-Computer 103 erzeugt und an das PDA 102 gesendet (Schritt 128).

In der Produkt-Informations-Nachricht 129 sind vorzugsweise folgende Produktinformationen enthalten:
• allgemeine Produktinformationen, wie beispielsweise das Herstellungsdatum oder die Haltbarkeit des jeweiligen Produkts,
• Anwendungshinweise, beispielsweise bei einen Nahrungsmittel auch Kochrezepte, in denen das jeweilige Nahrungsmittel verwendet wird,
• Informationen im Rahmen einer Produktberatung, beispielsweise eine e-Mail-Adresse, eine Telefonnummer, etc., allgemein eine Kontaktadresse zu einer Instanz, von der eine Produktberatung bereitgestellt wird,
• Produktspezifische Werbeangaben, vorzugsweise Hinweise auf neue Produkte oder auch Hinweise auf dem jeweiligen Produkt verwandte Produkte,
• Garantieinformationen,
• Gefahrengutinformationen,
• Informationen zu Erste-Hilfe-Maßnahmen, beispielsweise Hinweise zu Maßnahmen in einem Fall, in dem ein Waschmittel verschluckt worden ist,
• Informationen zur Verträglichkeit von Produkten, vorzugsweise in einem Fall, in dem zwei Produkte mit einem erfindungsgemäßen Transponder versehen sind,
   • beispielsweise für den Fall, dass das erste Produkt ein Farb-Grundierungsmittel ist und das zweite Produkt eine Farbe, eine Angabe darüber, welche Farbe auf einem jeweiligen Farb-Grundierungsmittel gut hält, oder
   • beispielsweise für den Fall, dass das erste Produkt eine Haartönung ist und das zweite Produkt ein Haarwaschmittel, eine Angabe darüber, welches Haarwaschmittel für die jeweilige Haartönung am schonendsten ist.

Das PDA 102 wiederum empfängt die Produkt-Informations-Nachricht 129 (Schritt 130), decodiert diese und stellt unter Verwendung des gespeicherten Internet-Browser-Programms die Produkt-Information dem Benutzer des PDA 102 dar (Schritt 131).

Ist in der Zusatzinformation 209 das Kaufdatum gespeichert, so ist es in einer alternativen Ausgestaltung vorgesehen, dieses mit der Transponder-ID-Nachricht 123 an den Server-Computer 103 zu übermitteln und dann entsprechende Aktionen im Rahmen einer Garantie-Leistung über das Internet/Intranet abzuwickeln.

Es ist in diesem Zusammenhang anzumerken, dass es in einer alternativen Ausgestaltung der Erfindung vorgesehen ist, dass in dem ersten Speicherbereich 206 ein mittels eines geheimen Schlüssels des Herstellers des Produkts, dem der Transponder 101 zugeordnet ist, verschlüsselte Transponder-ID 208 gespeichert ist, womit eine bei deren Auswertung, das heißt bei deren Mitübersendung an das PDA 102 und an den Server-Computer 103 in den entsprechenden Nachrichten eine erhöhte kryptographisch abgesicherte Authentifikation und damit eine verlässlichere Zugriffskontrolle in dem Server-Computer ermöglicht ist.

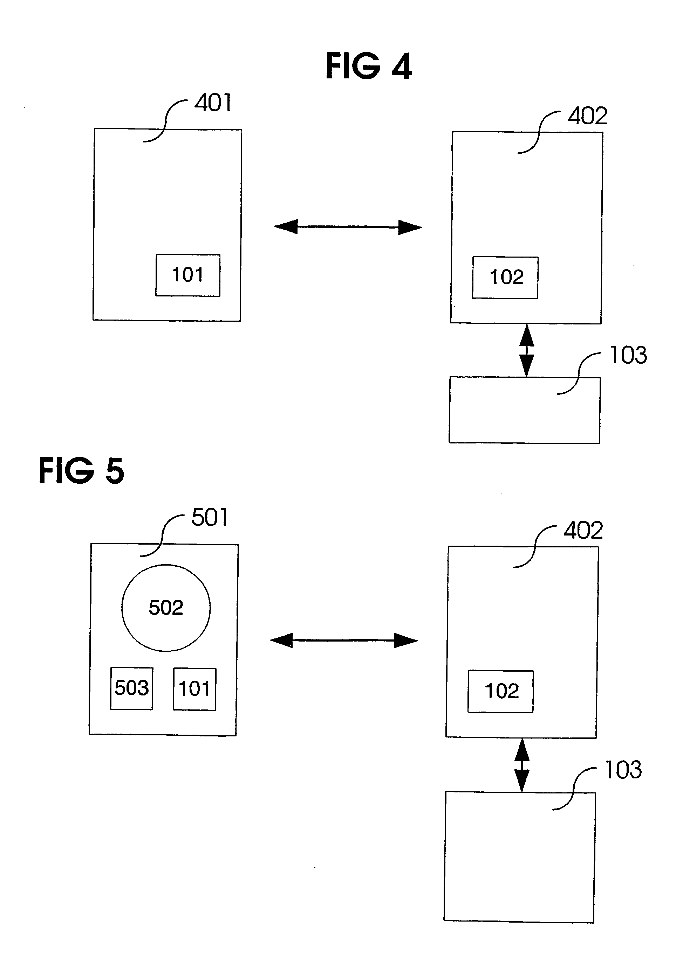

Fig.4 zeigt ein erstes Ausführungsbeispiel, bei dem der Transponder 101 an einer Waschmittelverpackung 401 angebracht ist und bei dem der Client-Computer 102 in einer Waschmaschine 402 mit einem entsprechenden Bildschirm und einer entsprechenden Tastatur integriert ist.

Die Waschmaschine 402 selbst hat ebenfalls eine Kommunikationsschnittstelle, mit der eine Kommunikation über das Internet/Intranet ermöglicht ist.

Der Client-Computer 102 weist ebenso eine in die Waschmaschine 402 integrierte Transponder-Lese-Einrichtung auf, mittels der die Informationen aus dem Speicher des Transponders 101 gelesen werden kann.

Die Kommunikation zwischen dem Client-Computer 102, der Waschmaschine 402 und dem Server-Computer 103 erfolgt über ein Kommunikations-Festnetz.

Gemäß diesem Ausführungsbeispiel ist es für einen Käufer des Produkts, gemäß diesem Ausführungsbeispiel ein Waschmittel, 401 sehr einfach möglich, nähere Informationen, beispielsweise Tipps oder Hinweise für bestimmte Waschvorgänge und/oder für die Dosierung des Waschmittels, welche von dem Produkthersteller des Waschmittels 401 über den Server-Computer 103 bereitgestellt werden, abzurufen, indem das Waschmittel 401 lediglich in den Lesebereich der Transponder-Lese-Einrichtung der Waschmaschine 402 gebracht wird und über die Waschmaschine 402 die entsprechende Kommunikationsverbindung zu der Internet-Seite oder Intranet-Seite, in der die Produktinformation enthalten ist, aufgebaut wird.

**Fig.5** zeigt ein zweites Ausführungsbeispiel der Erfindung, bei dem das Produkt eine Uhr 501 ist, in welcher mit einem Ziffernblatt 502, in welche Uhr 501 der Transponder 101 sowie ein GPS-Empfänger 503 integriert ist.

Der Client-Computer 102 ist in diesem Fall als PDA ausgestaltet und die Kommunikation läuft ebenfalls wie in Fig.1a und Fig.1b dargestellt.

Wird von dem Server-Computer 103 in diesem Fall ein Fehlersignal erzeugt, so wird gemäß diesem Ausführungsbeispiel das GPS-System aktiviert und es wird unter Verwendung des Teils des GPS-Systems 503 der Uhr 501 die örtliche Position der Uhr 501 ermittelt.

In einer alternativen Ausgestaltung der Erfindung ist es vorgesehen, dass bei negativ verlaufender Verifizierung der Transponder-ID von dem Server-Computer 103 mittels der IP-Adresse des Client-Computers 102 der jeweilige Verkaufsstandort ermittelt wird.

Gemäß einer anderen alternativen Ausgestaltung der Erfindung ist es vorgesehen, das oben beschriebene System im Rahmen einer Produkt-Rückrufaktion einzusetzen.

In diesem Fall bringt ein Besitzer eines jeweiligen Produkts dieses zu einem Client-Computer 102, um sich zu vergewissern, ob sein Produkt 401, 501 bereits ausgetauscht wurde bzw. einer entsprechenden Reparatur oder Bearbeitung unterzogen worden ist oder vielleicht gar nicht von der entsprechenden Produkt-Rückrufaktion betroffen ist.

Zusammenfassend ist es erfindungsgemäß insbesondere aufgrund der Zugriffskontrolle erfindungsgemäß möglich, über jedes einzelne Produkt selektiv und individuell auf sehr einfache Weise Informationen abzurufen und nicht nur über eine gesamte Produktgruppe Informationen abzufragen.

## Patentansprüche

1. Verfahren zum rechnergestützten Ermitteln einer einem Objekt zugeordneten Information,
bei dem eine von der Internet-Adresse oder Intranet-Adresse identifizierte Internet-Seite oder Intranet-Seite von einem Server Computer (130) aufgerufen wird,
**dadurch gekennzeichnet dass**,
- aus einem Speicher (206) eines dem Objekt zugeordneten Transponders (101) eine Internet-Adresse oder Intranet-Adresse (210) und eine den Transponder eindeutig identifizierende Identifikationsangabe (207) ausgelesen (111) wird, und dass,
- unter Verwendung der aus dem Speicher ausgelesenen Identifikationsangabe eine Zugriffskontrolle von dem Server-Computer (103) durchgeführt wird, wobei überprüft wird, ob für die Identifikationsangabe des Transponders ein zulässiges Objekt existiert, und dass,
- bei erfolgreicher Zugriffskontrolle über die Internet-Seite oder Intranet-Seite Zugriff auf die dem Objekt zugeordnete Information ermöglicht wird (128), und dass,
- bei nicht erfolgreicher Zugriffskontrolle ein Fehlersignal erzeugt wird (127).

2. Verfahren nach Anspruch 1,
• bei dem die in komprimierter Form gespeicherte Internet-Adresse oder Intranet-Adresse aus dem Speicher des Transponders ausgelesen wird,
• bei dem die ausgelesene komprimierte Internet-Adresse oder Intranet-Adresse dekomprimiert wird, und
• bei dem unter Verwendung der dekomprimierten Internet-Adresse oder Intranet-Adresse die von der Internet-Adresse oder Intranet-Adresse identifizierte Internet-Seite oder Intranet-Seite aufgerufen wird.

3. Verfahren nach Anspruch 1 oder 2,
• bei dem die in verschlüsselter Form gespeicherte Internet-Adresse oder Intranet-Adresse aus dem Speicher des Transponders ausgelesen wird,
• bei dem die ausgelesene verschlüsselte Internet-Adresse oder verschlüsselte Intranet-Adresse entschlüsselt wird, und
• bei dem unter Verwendung der entschlüsselten Internet-Adresse oder entschlüsselten Intranet-Adresse die von der entschlüsselten Internet-Adresse oder entschlüsselten Intranet-Adresse identifizierte Internet-Seite oder Intranet-Seite aufgerufen wird.

4. Verfahren nach einem der Ansprüche 1 bis 3,
bei dem die Zugriffskontrolle unter Verwendung eines kryptographischen Mechanismus durchgeführt wird.

5. Verfahren nach Anspruch 4,
bei dem die Zugriffskontrolle unter Verwendung der Identifikationsangabe erfolgt, wobei die Identifikationsangabe kryptographisch gesichert ist.

6. Verfahren nach Anspruch 5,
bei dem die Zugriffskontrolle unter Verwendung einer über die Identifikationsangabe gebildeten digitalen Signatur durchgeführt wird.

7. Verfahren nach einem der Ansprüche 1 bis 6,
bei dem die Internet-Adresse oder Intranet-Adresse und die Identifikationsangabe mittels einer Transponder-Lese-Einrichtung ausgelesen wird, welche mit einem Client-Computer gekoppelt ist, der unter Verwendung einer Kommunikationsschnittstelle die Kommunikationsverbindung mit einem Server-Computer, auf dem die Internet-Seite oder Intranet-Seite gespeichert ist, aufbaut.

8. Verfahren nach Anspruch 7,
• bei dem von dem Client-Computer an den Server-Computer eine Internet/Intranet-Seiten-Anforderungsnachricht übertragen wird, welche die Internet-Adresse oder Intranet-Adresse enthält,
• bei dem von dem Server-Computer eine Zugriffskontroll-Anforderungsnachricht an den Client-Computer übertragen wird,
• bei dem von dem Client-Computer nach Erhalt der Zugriffskontroll-Anforderungsnachricht die ldentifikationsangabe oder eine kryptographisch gesicherte Nachricht, welche die Identifikationsangabe eindeutig charakterisiert, an den Server-Computer als Zugriffskontroll-Information gesendet wird, und
• bei dem die Zugriffskontrolle von dem Server-Computer anhand der zu empfangenden Zugriffskontroll-Information durchgeführt wird.

9. Verfahren nach einem der Ansprüche 1 bis 8,
bei dem aus dem Speicher des Transponders in diesem gespeicherte zusätzliche Information über das Objekt ausgelesen wird und weiter verarbeitet wird.

10. Verfahren nach Anspruch 9,
bei dem die zusätzliche Information ein Datum des Kaufs des Objekts und/oder eine Angabe über den das Objekt vertreibenden Händlers enthält.

11. Verfahren nach einem der Ansprüche 1 bis 10,
bei dem bei nicht erfolgreicher Zugriffskontrolle die örtliche Position des Objekts ermittelt wird und/oder ein das Objekt vertreibender Händler identifiziert wird.

12. System zum Ermitteln einer einem Objekt zugeordneten Information, mit einer Transponder-Lese-Einrichtung (192), wobei die Transponder-Lese-Einrichtung mit einer Kornmunikationsschnittstelle (307) gekoppelt ist, welche derart eingerichtet ist, dass über sie eine Kommunikation über das Internet/Intranet ermöglicht ist,
**dadurch gekennzeichnet dass**,
die Transponder-Lese-Einrichtung derart eingerichtet ist, dass von ihr eine in dem Speicher (206) eines Transponders (101) gespeicherte Internet-Adresse oder Intranet-Adresse (210) und eine den Transponder eindeutig identifizierende Identifikationsangabe (207) ausgelesen werden kann, und dass ein Server-Computer (103), welcher eine Internet-Seite oder Intranet-Seite bereitstellt, wobei der Server-Computer bei Aufruf der Internet-Seite oder Intranet Seite über die Kommunikationsschnittstelle der Transponder-Lese-Einrichtung eine Zugriffskontrolle durchgeführt wird, wobei überprüft wird, ob für die auf dem Speicher ausgelesenen Identifikationsangabe des Transponders ein zulässiges Objekt existiert.

13. System nach Anspruch 12,
mit einem Transponder, der einen Speicher aufweist, in dem eine Internet-Adresse oder Intranet-Adresse und eine den Transponder eindeutig identifizierende Identifikationsangabe gespeichert ist.

## Claims

1. A method for computer-aided determination of information associated with an object, in which an Internet page or intranet page identified by the Internet address or intranet address is called, from a server computer (130)
**characterized in, that**
• an Internet address or intranet address (210) and an identification which clearly identifies (207) a transponder associated with the object (101) are read (111) from a memory (206) in the transponder, and that
• the identification is used to perform an access control, with a check being carried out by a server computer (103) to determine whether a permissible object exists for the transponder's identification, and that
• in the event of successful access control, the Internet page or intranet page is used to permit access to the information associated with the object (128), and that
• in the event of unsuccessful access control, an error signal is produced (127).

2. The method as claimed in claim 1,
• in which the Internet address or intranet address stored in compressed form is read from the transponder's memory,
• in which the compressed Internet address or intranet address which is read is decompressed, and
• in which the decompressed Internet address or intranet address is used to call the Internet page or intranet page identified by the Internet address or intranet address.

3. The method as claimed in claim 1 or 2,
• in which the Internet address or intranet address stored in encrypted form is read from the transponder's memory,
• in which the encrypted Internet address or encrypted intranet address which is read is decrypted, and
• in which the decrypted Internet address or decrypted intranet address is used to call the Internet page or intranet page identified by the decrypted Internet address or decrypted intranet address.

4. The method as claimed in one of claims 1 to 3,
in which the access control is performed using a cryptographic mechanism.

5. The method as claimed in claim 4,
in which the access control takes place using the identification, the identification being protected cryptographically.

6. The method as claimed in claim 5,
in which the access control is performed using a digital signature formed using the identification.

7. The method as claimed in one of claims 1 to 6,
in which the Internet address or intranet address and the identification are read using a transponder reading device which is coupled to a client computer which uses the communication interface to set up the communication connection to a server computer on which the Internet page or intranet page is stored.

8. The method as claimed in claim 7,
• in which the client computer transfers to the server computer an Internet/intranet page request message which contains the Internet address or intranet address,
• in which the server computer transfers an access control request message to the client computer,
• in which the client computer, having received the access control request message, sends the identification or a cryptographically protected message which clearly characterizes the identification to the server computer as access control information, and
• in which the access control is performed by the server computer using the access control information which is to be received.

9. The method as claimed in one of claims 1 to 8,
in which additional information, stored in the transponder, about the object is read from the transponder's memory and is processed further.

10. The method as claimed in claim 9,
in which the additional information is a date on which the object was purchased and/or details about the trader selling the object.

11. The method as claimed in one of claims 1 to 10,
in which, in the event of unsuccessful access control, the local position of the object is determined and/or a trader selling the object is identified.

12. A system for determining information associated with an object, with having a transponder reading device (192), where the transponder reading device is coupled to a communication interface (307) which has been set up such that it can be used for communication over the Internet/intranet,
**characterized in, that**
• the transponder reading device has been set up such that it can read an Internet address or intranet address (210) stored in the transponder's (101) memory (206) and an identification (207) which clearly identifies the transponder, and that
• a server computer which provides an Internet page or intranet page, the server computer (103) being able to perform an access control using the transponder reading device's communication interface when the Internet page or intranet page is called, with a check being carried out to determine whether a permissible object exists for the transponder's identification, read out on the memory.

13. The system as claimed in claim 12,
having a transponder which has a memory in which an Internet address or intranet address and an identification which clearly identifies the transponder are stored.

## Revendications

1. Procédé pour la détermination assistée par ordinateur d'une information associée à un objet,
dans lequel une page Internet ou page Intranet d'un ordinateur serveur (130) identifiée par l'adresse Internet ou adresse Intranet est appelée,
**caractérisé en ce que**
- une adresse Internet ou adresse Intranet (210) et une indication d'identification (207) identifiant le transpondeur de manière univoque sont lues (111) dans une mémoire (206) d'un transpondeur (101) associé à l'objet et **en ce que**
- un contrôle d'accès est exécuté par l'ordinateur serveur (103) en utilisant l'indication d'identification lue dans la mémoire, une vérification ayant lieu pour savoir s'il existe un objet autorisé pour l'indication d'identification du transpondeur et **en ce que**
- un accès à l'information associée à l'objet est rendu possible (128) par le biais de la page Internet ou page Intranet en cas de contrôle d'accès réussi et **en ce que**
- un signal d'erreur est produit (127) en cas d'échec du contrôle d'accès.

2. Procédé selon la revendication 1,
• dans lequel l'adresse Internet ou adresse Intranet enregistrée sous forme compressée est lue dans la mémoire du transpondeur,
• dans lequel l'adresse Internet ou adresse Intranet compressée lue est décompressée et
• dans lequel la page Internet ou page Intranet identifiée par l'adresse Internet ou adresse Intranet est appelée en utilisant l'adresse Internet ou adresse Intranet décompressée.

3. Procédé selon la revendication 1 ou 2,
• dans lequel l'adresse Internet ou adresse Intranet enregistrée sous forme chiffrée est lue dans la mémoire du transpondeur,
• dans lequel l'adresse Internet chiffrée ou adresse Intranet chiffrée lue est déchiffrée et
• dans lequel la page Internet ou page Intranet identifiée par l'adresse Internet déchiffrée ou adresse Intranet déchiffrée est appelée en utilisant l'adresse Internet déchiffrée ou adresse Intranet déchiffrée.

4. Procédé selon l'une des revendications 1 à 3,
dans lequel le contrôle d'accès est exécuté en utilisant un mécanisme cryptographique.

5. Procédé selon la revendication 4,
dans lequel le contrôle d'accès est réalisé en utilisant l'indication d'identification, l'indication d'identification étant protégée par cryptographie.

6. Procédé selon la revendication 5,
dans lequel le contrôle d'accès est exécuté en utilisant une signature numérique formée au moyen de l'indication d'identification.

7. Procédé selon l'une des revendications 1 à 6,
dans lequel l'adresse Internet ou adresse Intranet et l'indication d'identification sont lues au moyen d'un dispositif de lecture de transpondeur couplé à un ordinateur client qui, en utilisant une interface de communication, établit la liaison de communication avec un ordinateur serveur sur lequel la page Internet ou page Intranet est enregistrée.

8. Procédé selon la revendication 7,
• dans lequel un message de demande de page Internet/Intranet contenant l'adresse Internet ou adresse Intranet est transmis de l'ordinateur client à l'ordinateur serveur,
• dans lequel un message de demande de contrôle d'accès est transmis à l'ordinateur client par l'ordinateur serveur,
• dans lequel l'ordinateur client envoie à l'ordinateur serveur, en tant qu'information de contrôle d'accès, après réception du message de demande de contrôle d'accès, l'indication d'identification ou un message protégé par cryptographie caractérisant de manière univoque l'indication d'identification et
• dans lequel le contrôle d'accès est exécuté par l'ordinateur serveur sur la base de l'information de contrôle d'accès à recevoir.

9. Procédé selon l'une des revendications 1 à 8,
dans lequel une information supplémentaire concernant l'objet enregistrée dans la mémoire du transpondeur est lue dans cette dernière et traitée.

10. Procédé selon la revendication 9,
dans lequel l'information supplémentaire est une date d'achat de l'objet et/ou une indication sur le marchand commercialisant l'objet.

11. Procédé selon l'une des revendications 1 à 10,
dans lequel, en cas d'échec du contrôle d'accès, la position locale de l'objet est déterminée et/ou un marchand commercialisant l'objet est identifié.

12. Système de détermination d'une information associée à un objet, comprenant un dispositif de lecture de transpondeur (192), le dispositif de lecture de transpondeur étant couplé à une interface de communication (307) adaptée pour permettre, par son intermédiaire, une communication par le biais de l'Internet/Intranet,
**caractérisé en ce que**
le dispositif de lecture de transpondeur est adapté de manière à pouvoir lire une adresse Internet ou adresse Intranet (210) enregistrée dans la mémoire (206) d'un transpondeur (101) et une indication d'identification (207) identifiant le transpondeur de manière univoque, et **en ce qu'**est prévu un ordinateur serveur (103) qui fournit une page Internet ou page Intranet, un contrôle d'accès étant exécuté par l'ordinateur serveur lors de l'appel de la page Internet ou page Intranet par le biais de l'interface de communication du dispositif de lecture de transpondeur, une vérification ayant lieu pour savoir s'il existe un objet autorisé pour l'indication d'identification du transpondeur lue sur la mémoire.

13. Système selon la revendication 12,
comprenant un transpondeur pourvu d'une mémoire dans laquelle une adresse Internet ou adresse Intranet et une indication d'identification identifiant le transpondeur de manière univoque sont enregistrées.
